(19) Europäisches Patentamt
European Patent Office
Office européen des brevets

(11) Veröffentlichungsnummer: **0 095 100**
**A2**

(12) **EUROPÄISCHE PATENTANMELDUNG**

(21) Anmeldenummer: **83104695.8**

(22) Anmeldetag: **13.05.83**

(51) Int. Cl.³: **C 08 L 71/04**
C 08 L 25/08, C 08 L 35/06
C 08 K 5/53

(30) Priorität: **21.05.82 DE 3219047**

(43) Veröffentlichungstag der Anmeldung:
**30.11.83 Patentblatt 83/48**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Muench, Volker, Dr.**
**Luitpoldstrasse 114**
**D-6700 Ludwigshafen(DE)**

(72) Erfinder: **Hambrecht, Juergen, Dr.**
**Werderstrasse 30**
**D-6900 Heidelberg(DE)**

(72) Erfinder: **Boehlke, Klaus, Dr.**
**Gerhart-Hauptmann-Strasse 53**
**D-6717 Hessheim(DE)**

(72) Erfinder: **Henne, Andreas, Dr.**
**Bruesseler Ring 34**
**D-6700 Ludwigshafen(DE)**

(72) Erfinder: **Swoboda, Johann, Dr.**
**Neuwiesenstrasse 28**
**D-6700 Ludwigshafen(DE)**

(72) Erfinder: **Naarmann, Herbert, Dr.**
**Haardtblick 15**
**D-6719 Wattenheim(DE)**

(54) **Selbstverlöschende thermoplastische Formmassen.**

(57) Selbstverlöschende thermoplastische Formmassen, die ein schlagfest modifiziertes Polymerisat einer monovinylaromatischen Verbindung, einen Polyphenylenether, einen Flammschutzzusatz sowie gegebenenfalls übliche Zusatzstoffe in wirksamen Mengen enthalten.

**EP 0 095 100 A2**

## Selbstverlöschende thermoplastische Formmassen

Die Erfindung betrifft selbstverlöschende thermoplastische Formmassen, enthaltend

A) 70 bis 10 Gew.-Teile eines schlagfest modifizierten Polymerisates einer monovinylaromatischen Verbindung, insbesondere eines Styrolpolymerisates,

B) 30 bis 90 Gew.-Teile eines Polyphenylenethers,

C) 1 bis 20 Gew.-Teile eines Flammschutzzusatzes, sowie

D) - gegebenenfalls - übliche Zusatzstoffe in wirksamen Mengen,

die nach Entzündung mit einer heißen Flamme in wenigen Sekunden verlöschen und nicht brennend abtropfen.

Thermoplastische Formmassen, die sich zur Herstellung von Formteilen eignen, die schlagfest modifizierte Styrolpolymerisate und Polyphenylenether enthalten und selbstverlöschend sind, sind z.B. aus der DE-AS 20 37 510 und der US-PS 3 809 729 bekannt. Diese Formmassen enthalten zur Flammfestausrüstung sowohl eine aromatische Phosphorkomponente als auch eine aromatische Halogenverbindung.

Aufgrund der korrosiv wirkenden Verbrennungsgase bei Einsatz von halogenhaltigen Substanzen sind aber halogenfreie selbstverlöschende Formmassen erstrebenswert. Es können aber auch ohne Zusatz von Halogenverbindungen unter Verwendung von aromatischen Phosphaten und cyclischen

vG/P

Phosphonaten bzw. Phosphaten, wie beispielsweise in den US-PSen 3 883 613, 4 154 775 und der DE-OS 28 36 771 beschrieben, selbstverlöschende Formmassen erhalten werden, diese besitzen aber zum Teil eine geringe Wirksamkeit und müssen deshalb in relativ hohen Mengen den Formmassen zugesetzt werden. Ein zusätzlicher Nachteil ist die wesentlich verschlechterte Wärmeformbeständigkeit und die häufig dunkle Eigenfarbe dieser Formmassen. Einige der angewendeten Flammschutzmittel können außerdem korrodierende Wirkung auf Teile der Einarbeitungsmaschinen, wie z.B. Extruderschnecken, ausüben.

Der vorliegenden Erfindung lag daher die Aufgabe zugrunde, thermoplastische Formmassen auf der Grundlage Styrolpolymerisaten und Polyphenylenethern zu schaffen, die bereits bei geringen Mengen Flammschutzzusatz nach Entzündung mit einer heißen Flamme in wenigen Sekunden verlöschen, nicht brennend abtropfen, keine Halogen-Flammschutzmittel enthalten, eine hohe Wärmeformbeständigkeit und helle Eigenfarbe besitzen und keine Korrosionsprobleme aufwerfen.

Diese Aufgabe wird erfindungsgemäß gelöst durch Formmassen, die als Flammschutzzusatz Amide, Ester und/oder Salze organisch substituierter Phosphinsäuren enthalten.

Gegenstand der Erfindung sind dementsprechend selbstverlöschende thermoplastische Formmassen, enthaltend

A) 70 bis 10 Gew.-Teile eines schlagfest modifizierten Polymerisats einer monovinylaromatischen Verbindung, insbesondere eines Styrolpolymerisats,

B) 30 bis 90 Gew.-Teile eines Polyphenylenethers,

C) 1 bis 20 Gew.-Teile eines Flammschutzzusatzes, sowie

D) - gegebenenfalls - übliche Zusatzstoffe in wirksamen Mengen.

Die erfindungsgemäßen Formmassen sind dadurch gekennzeichnet, daß als Flammschutzzusatz C) Amide, Ester oder Salze organisch substituierter Phosphinsäuren verwendet werden.

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die Komponente A) der erfindungsgemäßen Formmassen soll wenigstens ein schlagfest modifiziertes Polymerisat einer monovinylaromatischen Verbindung sein, wobei bis zu 40 Gew.% an monovinylaromatischen Verbindungen durch andere Comonomere ersetzt sein können. Als monovinylaromatische Verbindungen kommen dabei insbesondere Styrol in Betracht, ferner die Kern- oder Seitenketten-alkylierten Styrole, Vorzugsweise wird aber Styrol allein verwendet. Als Comonomere kommen beispielsweise Acrylnitril, Maleinsäureanhydrid und Ester der Acrylsäure bzw. Methacrylsäure in Frage. Es können auch mehrere Comonomere gleichzeitig verwendet werden.

Die meist angewandten Verfahren zur Herstellung schlagzäh modifizierter Styrolpolymerisate sind die Polymerisation in Masse oder Lösung, wie sie beispielsweise in der US-PS 2 694 692 beschrieben sind, und Verfahren zur Masse-Suspensionspolymerisation, wie sie beispielsweise in der US-PS 2 862 906 beschrieben sind. Selbstverständlich sind auch andere Verfahren anwendbar.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk z.B. Polybutadien, Polyisopren und Mischpolymerisate des Butadiens und/oder Isoprens mit Styrol und anderen Comonomeren, die eine Glastemperatur unter -20$^{o}$C besitzen. Besonders eignen sich Butadien-Polymerisate mit einem 1,4-cis-Gehalt, der zwischen 25 und 98 % liegt.

Als Komponente (B) kommen Polyphenylenether auf der Basis von in ortho-Position disubstituierten Polyphenylenoxiden in Frage, wobei der Ethersauerstoff der einen Einheit an den Benzolkern der benachbarten Einheit gebunden ist. Dabei sollen mindestens 50 Einheiten miteinander verknüpft sein. Die Polyether können in ortho-Stellung zum Sauerstoff, Wasserstoff, Halogen, Kohlenwasserstoff, die kein α-ständiges tertiäres Wasserstoffatom besitzen, Halogenkohlenwasserstoffe, Phenylreste und Kohlenwasserstoff-oxi-Reste tragen. So kommen in Frage: Poly(2,6-dichlor-1,4-phenylen)-ether, Poly(2,6-diphenyl-1,4-phenylen)ether, Poly(2,6-dimethoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)-ether eingesetzt. Besonders bevorzugt sind dabei Poly-(2,6-dimethyl-1,4-phenylen)ether mit einer Grenzviskosität von 0,40 bis 0,65 dl/g (gemessen in Chloroform bei 30°C).

Die Polyphenylenether können z.B. in Gegenwart von komplexbildenden Mitteln wie Kupferbromid und sek. Dibutylamin aus den Phenolen hergestellt werden.

Der Flammschutzzusatz, Komponente C) der erfindungsgemäßen Formmassen besteht aus Estern, Amiden oder Salzen organisch substituierter Phosphinsäuren der allgemeinen Formeln (I) (II) (III) und (IV).

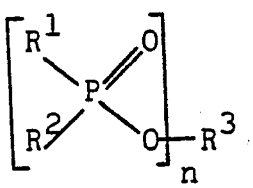

I

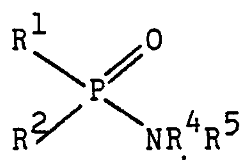

II

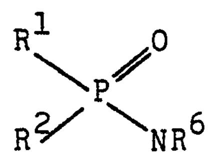

III

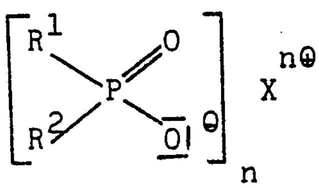

IV

Die Reste $R^1$, $R^2$ und $R^3$ können gleich oder verschieden sein und umfassen vor allem unsubstituierte und substituierte Phenylgruppen. Auch Alkylgruppen, insbesondere mit C-Kettenlängen zwischen 1 - 18 können beim Aufbau dieser Phosphinsäurederivate eingesetzt werden. Beispiele für $R^1$, $R^2$ und $R^3$ sind Phenyl, Tolyl, Kresyl, Mesityl, Naphthyl sowie $C_1$ - $C_{18}$-Alkylgruppen, die linear oder verzweigt sein können, wie z.B. Methyl, Ethyl, Butyl, Ethylhexyl und ähnliche

Gruppen. Der Rest $R^3$ kann jedoch auch ein zwei- oder mehrbindiger Alkyl- oder Arylrest, wie z.B. 1,2-Ethyliden, 1,3- und 1,2-Propyliden, 1,2,3-Propyliden, 1,4-Butyliden, 1,6-Cyclohexyliden, 1,2- oder 1,3- oder 1,4-Phenylen, 2-Methyl-1,4-phenylen, 2,6-Dimethyl-1,4-phenylen, 1,2-Naphthylen, 1,4-Naphthylen oder 1,3,5-Phenylen sein. Die Reste $R^4$ und $R^5$ können einer der obengenannten Reste $R^1$ und $R^2$, der Rest $R^4$ kann zusätzlich auch Wasserstoff sein. Der Rest $R^6$ kann eine zweibindige Alkylidenbrücke, wie z.B. 1,2-Ethyliden, 1,3-Propyliden, 1,4-Butyliden oder 1,5-Pentyliden sein. Die Gruppe X ist ein ein- oder mehrwertiges Kation aus der Gruppe organisch substituierter Ammonium- oder Phosphoniumkationen, wie z.B. Tetrabutylammonium, Triphenylammonium, Tetrahexylammonium, Tetrabutylphosphonium, Methyltriphenylphosphonium, Tetraphenylphosphonium, 1,2-Bis(triphenylphosphonium)ethan oder p-Xylyliden-bis(triphenylphosphonium) sein. n ist eine ganze Zahl von 1 bis 10, vorzugsweise 1 bis 3.

Besonders bevorzugt eingesetzt werden Ester, Amide oder Salze der Diphenyl-, Di-p-Tolyl-, Di-Kresyl-, Naphthylphenyl-, Phenylmethyl- und Phenylhexylphosphinsäure. Als Reste $R^3$ finden bevorzugt Phenyl-, p-Tolyl, p-Kresyl, Hexyl, 1,2-Ethyliden, 1,3-Propyliden, 1,2,3-Propyliden, 1,4-Butyliden und 1,4-Phenylen Verwendung. n ist vorzugsweise gleich 1 bis 3. Der Rest $R^4$ ist bevorzugt Wasserstoff und Methyl, der Rest $R^5$ bevorzugt Phenyl. Der Rest $R^6$ ist bevorzugt 1,5-Pentyliden.

Besonders bevorzugt eingesetzt werden folgende Verbindungen:

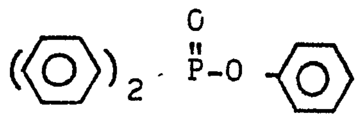

Verbindung 1

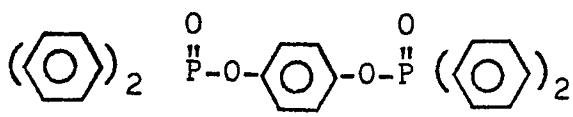

" 2

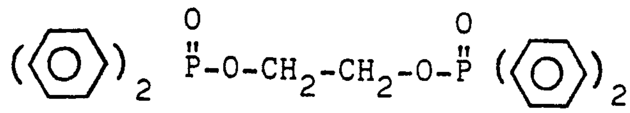

" 3

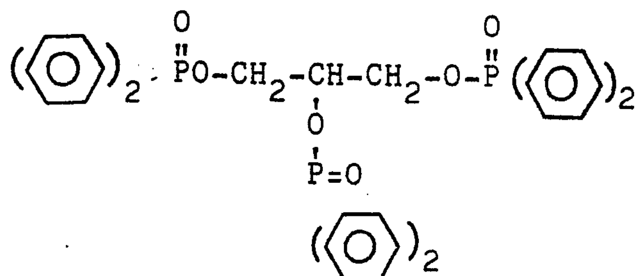

" 4

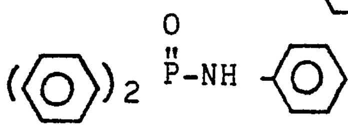

" 5

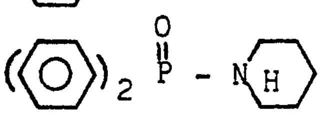

" 6

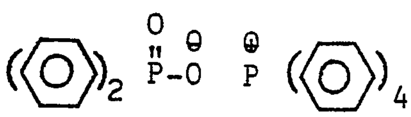

" 7

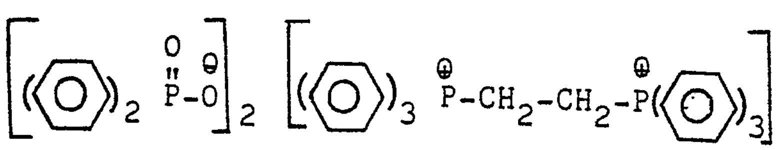

" 8

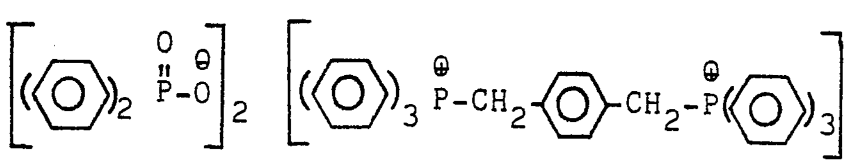

" 9

Die Darstellung der Phosphinsäurederivate Verbindung 1 bis Verbindung 4 erfolgt aus Diphenylphosphinsäurechlorid und dem entsprechenden Alkohol, Phenol, Polyol oder Diphenol in Gegenwart eines säurebindenden Mittels so wie es z.B. in Houben-Weyl, Methoden der Organischen Chemie, Organische Phosphorverbindungen Tl. I, Georg Thieme Verlag, Stuttgart 1963, Seite 248 ff., beschrieben ist. Die Darstellung der Phosphinsäurederivate Verbindung 5 und 6 erfolgt aus Diphenylphosphinsäurechlorid und dem entsprechenden Amin so wie es z.B. in I.N. Zhumorova et al. Russ. Journal of General Chemistry, Band 29, Seite 2052 ff (1959) beschrieben ist. Die Verbindungen 7, 8 und 9 werden durch die Umsetzung von Natriumdiphenylphosphinat mit den entsprechenden Phosphoniumbromiden in Ethanol, N-Methylacetamid, Dimethylsulfoxid, Dioxan, N-Methylpyrrolidon oder Sulfolan unter Ausfällen von NaBr hergestellt.

Die Mischungen können als Komponente D) weitere Zusatzstoffe, wie Pigmente, Füllstoffe, Oligo- und Polymere, Antistatika, Antioxidantien und Schmiermittel enthalten.

Man stellt die erfindungsgemäßen thermoplastischen Formmassen wie üblich auf Vorrichtungen, die ein homogenes Mischen zulassen, wie Knetern, Extrudern oder Walzenmischgeräten her.

Die erfindungsgemäßen Formmassen zeichnen sich dadurch aus, daß zur Erzielung der Flammschutzwirkung gegenüber dem Stand der Technik geringere Mengen Flammschutzmittel zugesetzt werden müssen, daß die Formmassen eine hohe Wärmeformbeständigkeit und helle Eigenfarbe aufweisen und daß keine korrodierende Wirkung auf die Verarbeitungsmaschinen ausgeübt wird.

## Patentanspruch

Selbstverlöschende thermoplastische Formmassen, enthaltend

A) 70 bis 10 Gew.-Teile eines schlagfest modifizierten Polymerisats einer monovinylaromatischen Verbindung, insbesondere eines Styrolpolymerisats,

B) 30 bis 90 Gew.-Teile eines Polyphenylenethers,

C) 1 bis 20 Gew.-Teile eines Flammschutzzusatzes, sowie

D) - gegebenenfalls - übliche Zusatzstoffe in wirksamen Mengen,

dadurch gekennzeichnet, daß als Flammschutzzusatz Amide, Ester oder Salze organisch substituierter Phosphinsäuren verwendet werden.